# EUROPEAN PATENT APPLICATION

(11) **EP 3 640 307 A1**
(43) Date of publication of application: **22.04.2020**
(21) Application number: 18816510.4
(22) Date of filing: 12.06.2018
(51) Int. Cl.: C09D 129/04, C08L 29/04, C08L 29/14, C08L 33/00, C08L 39/06, C09D 4/06, C09D 7/63, C09D 7/65, C09D 139/06, C09D 175/04

(54) **COATING COMPOSITION**

(30) Priority: 16.06.2017 JP 2017118438
(71) Applicant: Adeka Corporation, Tokyo 116-8554 (JP)
(72) Inventor: HARA, Kenji, Tokyo 116-8554 (JP); IRISAWA, Masatomi, Tokyo 116-8554 (JP)
(74) Representative: Kador & Partner PartG mbB
(86) International application number: PCT/JP2018/022436
(87) International publication number: WO 2018/230564

(57) **Abstract**

A coating composition containing a water-soluble polymer selected from the group consisting of the following (1) and (2) :
(1) a polyvinyl alcohol, a modified product thereof or a derivative thereof; and
(2) a polyvinylpyrrolidone, a modified product thereof or a derivative thereof.

## Description

### Technical Field

The present invention relates to a coating composition containing a specific water-soluble polymer. The coating composition is beneficial for conductive film, various optical films, transfer foil, gas barrier film, and the like, and moreover, since it can form a patterned cured product, it is beneficial for various resist materials.

### Background Art

A water-soluble polymer is used for various applications such as paint, ink, adhesives, and optical film.

For example, the following Patent Documents 1 to 4 disclose various coating materials containing a water-soluble polymer.

### Citation List

### Patent Document

Patent Document 1: JP 2008-050607 A
Patent Document 2: JP 2009-186776 A
Patent Document 3: JP 2016-520146 A
Patent Document 4: JP 3295153 B

### Summary of Invention

### Technical Problem

The present invention provides a coating composition which forms a cured product having excellent uniformity, durability, and transparency.

### Solution to Problem

The present invention provides a coating composition including a water-soluble polymer selected from the group consisting of (1) a polyvinyl alcohol, its modified product or its derivative; and (2) a polyvinylpyrrolidone, its modified product or its derivative.

In addition the present invention provides a cured product of the coating composition.

### Advantageous Effects of Invention

According to the present invention, it is possible to provide a coating composition which forms a cured product having excellent uniformity, durability, and transparency. A cured product of the present invention is particularly beneficial as an antistatic film, a protective film, a conductive film, an optical film, and the like because it has excellent uniformity, durability and transparency.

### Description of Embodiments

A coating composition of the present invention and a patterned cured product of the coating composition will be described below in detail.

The coating composition of the present invention includes a water-soluble polymer selected from the group consisting of the following (1) and (2).
(1) A polyvinyl alcohol, its modified product or its derivative
(2) A polyvinylpyrrolidone, its modified product or its derivative

Examples of (1) the polyvinyl alcohol, its modified product or its derivative include a polyvinyl alcohol obtained by polymerizing a vinyl alcohol generally called a poval, a partially saponified polyvinyl alcohol, and a completely saponified polyvinyl alcohol, and also include modified polyvinyl alcohols such as a (meth)acrylic group-modified polyvinyl alcohol, a (meth)acrylic amide group-modified polyvinyl alcohol, a carboxyl group-modified polyvinyl alcohol, an acetoacetic ester group-modified polyvinyl alcohol, a methylol group-modified polyvinyl alcohol, an amino group-modified polyvinyl alcohol, an ester group-modified polyvinyl alcohol, a carboxyl group-modified polyvinyl alcohol, an amide group-modified polyvinyl alcohol, a styryl pyridinium group-modified polyvinyl alcohol, a quaternary ammonium base-modified polyvinyl alcohol, an allyl group-modified polyvinyl alcohol, an oxypropylene group-modified polyvinyl alcohol, a urethane group-modified polyvinyl alcohol, an ether group-modified polyvinyl alcohol, a phosphate ester group-modified polyvinyl alcohol, an acetal group-modified polyvinyl alcohol, a butyral group-modified polyvinyl alcohol, a silanol group-modified polyvinyl alcohol, a photosensitive group-modified polyvinyl alcohol, and a polyvinyl alcohol having a 1,2-diol structure on the side chain; and a saponification product of a copolymer of vinyl acetate and a copolymerizable monomer, and the like. In order to obtain favorable solubility in water and improve the durability of a cured product, a modification ratio of the polyvinyl alcohol is preferably 0.1 to 10 mol% and more preferably 0.5 to 6.0 mol% with respect to an amount of hydroxyl groups in the polyvinyl alcohol. Examples of the monomer include unsaturated carboxylic acids such as maleic acid, maleic anhydride, fumaric acid, crotonic acid, itaconic acid, acrylic acid, and methacrylic acid and esters thereof, α-olefins such as ethylene and propylene, and allyl sulfonic acid, methallyl sulfonic acid, allyl sulfonic acid soda, methallyl sulfonate soda, sulfonate soda, sulfonate soda monoalkyl malates, disulphonate soda alkyl malates, N-methylol acrylamide, acrylamide alkyl sulfonic acid alkali salts, and the like. (1) The polyvinyl alcohol, its modified product or its derivative may be used alone or two or more thereof may be used in combination. Preferably, the weight average molecular weight (Mw) in terms of polystyrene of (1) the polyvinyl alcohol, its modified product or its derivative obtained through gel permeation chromatography (GPC) is 10,000 to 200,000, and a degree of saponification (hydrolysis rate) thereof is 85 to 100, and thus the water resistance is improved and the durability of a film is improved.

Regarding (1) the polyvinyl alcohol, its modified product or its derivative, a polyvinyl alcohol having a photosensitive group including one or more constituting units selected from the group consisting of the following General Formulae (IIIα), (IIIβ), (IIIγ), (IIIδ) and (IIIε) can be used.

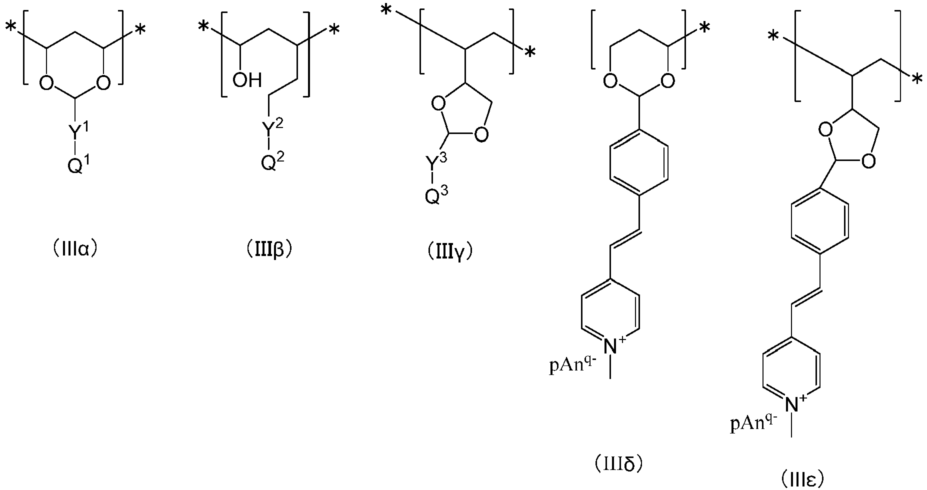

(In the formulae, Y¹, Y² and Y³ each independently represent a direct bond or a divalent linking group,
Q¹, Q² and Q³ each independently represent a photosensitive group,
An^{q-} represents a q-valent anion, q represents 1 or 2, and p represents a coefficient for keeping a charge neutral, and
* indicates a bond.)

Examples of photosensitive groups represented by Q¹, Q² and Q³ include a stilbazolium group, a cinnamoyl group, a vinyl group, an acrylic group, a methacryl group, an acrylic amide group or a methacrylic amide group, a cinnamyl group, a cinnamylidene group, a cinnamylidene acetyl group, a chalcone group, a coumarin group, an isocoumarin group, a 2,5-dimethoxystilbene group, a maleimide group, an α-phenylmaleimide group, a 2-pyrone group, an azide group, a thymine group, a quinone group, a maleimide group, a uracil group, a pyrimidine group, a styryl pyridinium group, or a styryl quinolium group.

Among polyvinyl alcohols having a photosensitive group including one or more constituting units selected from the group consisting of General Formulae (IIIα), (IIIβ), (IIIγ), (IIIδ) and (IIIε), a water-soluble polymer represented by the following General Formula (IV) is preferable because it has high stability.

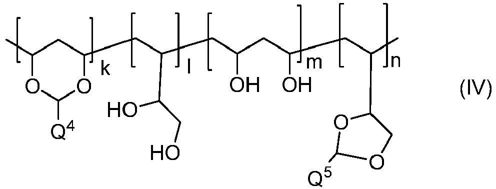

(In the formula, Q⁴ and Q⁵ each independently represent a photosensitive group, and 100 < k + l + m + n < 3,000 is satisfied.)

Regarding (1) the polyvinyl alcohol, its modified product or its derivative, commercially available products can be used, and examples thereof include Gohsenol NL-05, NH-18, NH-20, NH-26, NM-14, AH-17, A-300, GM-14L, GL-05, KL-05, GH-23, and KH-17 (commercially available from The Nippon Synthetic Chemical Industry Co., Ltd.); Gohsenx Z-100, Z-200, Z-300, and Z-410 (commercially available from The Nippon Synthetic Chemical Industry Co., Ltd.); Nichigo G-polymer OKS-1081 and OKS-1083 (commercially available from The Nippon Synthetic Chemical Industry Co., Ltd.); VF-17 and V-S20 (commercially available from Japan Vam & Poval Co., Ltd.); Kuraray Poval PVA-103, PVA-105, PVA-117, PVA-205, PVA-217, PVA-405, and PVA-420 (commercially available from Kuraray, Co., Ltd.); and Denka Poval K-05, K-17C, K-24E, H-12, H-17, B-05, and B-17 (commercially available from Denka Company Limited).

Examples of (2) the polyvinylpyrrolidone, its modified product or its derivative include a polyvinylpyrrolidone obtained by polymerizing a vinyl pyrrolidone, and also include a modified polyvinylpyrrolidone such as a (meth)acrylic group-modified polyvinylpyrrolidone, a (meth)acrylic amide group-modified polyvinylpyrrolidone, a carboxyl group-modified polyvinylpyrrolidone, an acetoacetic ester group-modified polyvinylpyrrolidone, a methylol group-modified polyvinylpyrrolidone, an amino group-modified polyvinylpyrrolidone, an ester group-modified polyvinylpyrrolidone, a carboxyl group-modified polyvinylpyrrolidone, an amide group-modified polyvinylpyrrolidone, a styryl pyridinium group-modified polyvinylpyrrolidone, a quaternary ammonium base-modified polyvinylpyrrolidone, an allyl group-modified polyvinylpyrrolidone, an oxypropylene group-modified polyvinylpyrrolidone, a urethane group-modified polyvinylpyrrolidone, an ether group-modified polyvinylpyrrolidone, a phosphate ester group-modified polyvinylpyrrolidone, an acetal group-modified polyvinylpyrrolidone, a butyral group-modified polyvinylpyrrolidone, a silanol group-modified polyvinylpyrrolidone, and a photosensitive group-modified polyvinylpyrrolidone; a saponification product of a copolymer of a vinyl pyrrolidone and a copolymerizable monomer, and the like. Examples of the monomer include unsaturated carboxylic acids such as maleic acid, maleic anhydride, fumaric acid, crotonic acid, itaconic acid, acrylic acid, and methacrylic acid and esters thereof, α-olefins such as ethylene and propylene, allyl sulfonic acid, methallyl sulfonic acid, allyl sulfonic acid soda, methallyl sulfonate soda, sulfonate soda, sulfonate soda monoalkyl malates, disulphonate soda alkyl malates, N-methylol acrylamide, and acrylamide alkyl sulfonic acid alkali salt derivatives. (2) The polyvinylpyrrolidone, its modified product or its derivative may be used alone or two or more thereof may be used in combination at an arbitrary ratio.

In the coating composition of the present invention, a conventionally known water-soluble polymer can be used in combination with those represented by (1) and (2) above. Examples of conventionally known water-soluble polymers include water-soluble polyester, oxidized starch, etherified, esterified or grafted modified starch, gelatin, casein, cellulose derivatives such as carboxymethyl cellulose, water-soluble resins such as a water-soluble polyacrylic ester resin, a water-soluble polycarbonate resin, a water-soluble polyvinyl acetate resin, a water-soluble styrene acrylate resin, a water-soluble vinyl toluene acrylate resin, a water-soluble polyurethane resin, a water-soluble polyamide resin, a water-soluble urea resin, a water-soluble polycaprolactone resin, a water-soluble polystyrene resin, a water-soluble polyvinyl chloride resin, a water-soluble polyacrylate resin, and a water-soluble polyacrylonitrile resin; and water-soluble polymers such as a styrene-butadiene copolymer, an acrylic ester copolymer, a polyvinyl acetate, and an ethylene-vinyl acetate copolymer.

Regarding the water-soluble polyester, those having a carboxyl group and/or a salt of a carboxyl group as a substituent are preferable because they dissolve in water and disperse in water and are emulsified or dissolve in alkaline water and those in which the carboxyl salt is an alkali metal salt, an ammonium salt or an amine salt are more preferable because effects of the present invention are improved.

The carboxyl group in the water-soluble polyester is preferably adjusted so that the acid number of the generated water-soluble polyester is between 15 and 250 KOHmg/g. When the acid number is less than 15 KOHmg/g, dispersion of polyester (B) in water is difficult, the uniformity deteriorates and film forming properties deteriorate. In addition, when the acid number exceeds 250 KOHmg/g, water resistance is poor.

Among the above water-soluble polyesters, those having a salt of a carboxyl group as a substituent can be obtained by, for example, polycondensation of a trifunctional or higher polyvalent carboxylic acid and a compound having one or two hydroxyl groups.

Examples of the trifunctional or higher polyvalent carboxylic acid include trimellitic acid, trimellitic anhydride, pyromellitic acid, pyromellitic anhydride, 4-methylcyclohexene-1,2,3 tricarboxylic acid anhydride, and trimesic acid. These may be used in combination.

Examples of the compound having one or two hydroxyl groups include an aliphatic polyol, a polyhydroxy aromatic compound, polyether diols, polyester diols, polyester polycarbonate diols, polycarbonate diols, polyolefin diols, and those in which one terminal hydroxyl group of a compound thereof is alkoxylated with an alkyl group having 1 to 25 carbon atoms. These may be used in combination.

Examples of the aliphatic polyol include aliphatic diols such as ethylene glycol, 1,2-propanediol, 1,3-propanediol, 2-methyl-1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, and 1,10-decanediol; alicyclic diols such as cyclohexane dimethanol, cyclohexanediol, hydrogenated bisphenol A, and hydrogenated bisphenol F; and trivalent or higher polyols such as trimethylol ethane, trimethylol propane, hexitol, pentitol, glycerin, polyglycerin, pentaerythritol, dipentaerythritol, and tetramethylolpropane.

Examples of the polyether diols include ethylene oxide adducts such as dithylene glycol and triethylene glycol; propylene oxide adducts such as dipropylene glycol and tripropylene glycol; low-molecular-weight polyol ethylene oxide and/or propylene oxide adducts; and polytetramethylene glycol.

Examples of the polyester diols include low-molecular-weight diols, dicarboxylic acids in amounts smaller than their stoichiometric amounts or esters thereof, ester-forming derivatives such as an anhydride and a halide, and/or lactones or those obtained by a direct esterification reaction and/or transesterification with hydroxycarboxylic acid obtained by hydrolysis ring opening thereof.

Examples of the dicarboxylic acid include aliphatic dicarboxylic acids such as oxalic acid, malonic acid, succinic acid, glutaric acid, adipic acid, azelaic acid, pimelic acid, suberic acid, azelaic acid, sebacic acid, fumaric acid, maleic acid, dodecanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3, 7-dimethyldecanedioic acid, hydrogenated dimer acids, and dimer acids; aromatic dicarboxylic acids such as phthalic acid, terephthalic acid, isophthalic acid, dimethyl malonic acid, glutaric acid, trimethyladipic acid, 2,2-dimethylglutaric acid, itaconic acid, 1,3-cyclopentane dicarboxylic acid, 1,2-cyclohexanedicarboxylic acid, 1,4-cyclohexanedicarboxylic acid, 2,5-norbornane dicarboxylic acid, 1,4-naphthalic acid, diphenic acid, 4,4'-hydroxybenzoic acid, diglycolic acid, thiodipropionic acid, hexahydroterephthalic acid, naphthalene 2,5-dicarboxylic acid, naphthalene 2,6-dicarboxylic acid, and pyromellitic monoanhydride; and alicyclic dicarboxylic acids such as cyclohexanedicarboxylic acid.

Examples of the polycarbonate diols include poly(1,6-hexylene)carbonate and poly(3-methyl-1,5-pentylene)carbonate, and examples of the polyolefin diols include polybutadiene glycol, hydrogenated polybutadiene glycol, and hydrogenated polyisoprene glycol. Among compounds having one or two hydroxyl groups in the same molecule, a polyether diol and/or polyester diol are particularly preferable. The molecular weight of the compound having one or two hydroxyl groups in the same molecule is 300 to 3,000, and preferably 500 to 2,000.

Examples of the polyhydroxy aromatic compound include 4,4-biphenol, 1,1-bis(4-hydroxyphenyl)ethane, 2,2-bis(4-hydroxyphenyl)propane, 2,2-bis(4-hydroxyphenyl)butane, bis(4-hydroxyphenyl)ether, bis(4-hydroxyphenyl)sulfide, bis (4-hydroxyphenyl) sulfone, 4,4'-(1-α-methylbenzylidene)bisphenol, 4,4'-(1-α-ethylbenzylidene)bisphenol, 1,1-bis(4-hydroxyphenyl)cyclohexane, 9,9-bis(4-hydroxyphenyl)fluorene, (α,(α'-bis(4-hydroxyphenyl)-1,4-diisopropylbenzene, hydrogenated bisphenol compounds, resorcinol, hydroquinone, 2,5-di-tert-butylhydroquinone, 1,4-dihydroxynaphthalene, 1,2,4-trihydroxybenzene, 2-[bis(4-hydroxyphenyl)methyl]benzyl alcohols, salicylic acid, xylylene glycol, and bishydroxyethoxybenzene.

In addition, the water-soluble polyester can be obtained by a method of graft polymerizing a polymerizable unsaturated carboxylic acid on polyester or a method in which, as disclosed in Japanese Patent Application Publication No. S62-240318, a glycol or a polyesterglycol having a hydroxyl group at the terminal and tetracarboxylic dianhydride are subjected to a selective monoesterification reaction and chain extension is caused.

Regarding the water-soluble polyester, commercially available products can be used, and examples thereof include Nichigo Polyester WR-961 and WR-1031 (commercially available from The Nippon Synthetic Chemical Industry Co., Ltd.); Pesresin A-680, A-690, A-210, and A-695GE (commercially available from Takamatsu Oil & Fat Co., Ltd.); Plas Coat Z-730 and Z-760(commercially available from Goo Chemical Co., Ltd.) ; and Vylonal MD-1100, MD-1200, MD-1245, MD-1335, MD-1480, MD-1500, MD-1930, MD-1985, and MD-2000 (commercially available from Toyobo Co., Ltd.).

In the coating composition of the present invention, when at least one crosslinking agent (hereinafter referred to as a "crosslinking agent") selected from the group consisting of a zirconium compound, a titanium compound, a bisazide compound, a blocked isocyanate, and an epoxy compound is additionally added to a water-soluble polymer, it reacts with a substituent on the side chain of the water-soluble polymer, and thus the water resistance and heat resistance can be improved.

Examples of the zirconium compound include zirconium halides such as zirconium oxychloride, hydroxy zirconium chloride, zirconium tetrachloride, and zirconium bromide; mineral acid zirconium salts such as zirconium sulfate, basic zirconium sulfate, zirconium oxynitrate, zirconium oxyacetate, and zirconium oxycarbonate; organic acid zirconium salts such as zirconium formate, zirconium acetate, zirconium propionate, zirconium caprylate, zirconium stearate, zirconium lactate, zirconium nitrate, zirconium carbonate, zirconium octylate, zirconium citrate, and zirconium phosphate; and zirconium complex salts such as zirconium carbonate ammonium, zirconium sulfate sodium, zirconium acetate ammonium, zirconium carbonate ammonium, zirconium carbonate potassium, oxalic acid zirconium sodium, zirconium citrate sodium, zirconium citrate ammonium, and zirconium lactate ammonium, and also include zirconium chelate complexes containing one, two or more chelating agents as ligands.

Examples of the chelating agent include hydroxycarboxylic acid or salts thereof, amino alcohols, amino carboxylic acid, β-diketone, dimethylglyoxime, citric acid, tartaric acid, maleic acid, polyhydrazide, and phosphate ester.

Examples of the zirconium chelate complex include zirconium tetraacetylacetonate, zirconium monoacetylacetonate, zirconium bis acetylacetonate, zirconium monoethyl acetoacetate, and zirconium acetate.

Among the above zirconium compounds, zirconium tetraacetylacetonate, zirconium monoacetylacetonate, zirconium oxychloride, zirconium oxynitrate and zirconium lactate ammonium are preferable because they have high stability, water solubility and reactivity. These zirconium compounds may be used alone or two or more thereof may be used in combination.

Regarding the zirconium compound, commercially available products can be used, and examples thereof include Zirconium Oxychloride, Zircozol ZC-2, Zircozol ZN, Zircozol HA, Zircozol AC-7, Zircozol ZK-10, Zircozol ZN, Zircozol ZA-10, Zircozol ZA-20, zirconyl octylate, and zirconyl carbonate (commercially available from Daiichi Kigenso Kagaku Kogyo Co., Ltd.), and Orgatix ZB-126, Orgatix ZC-700, Orgatix ZC-126, and ZC-300 (commercially available from Matsumoto Fine Chemical Co., Ltd.).

Examples of the titanium compound include titanium alkoxides such as tetramethyl titanate, tetraethyl titanate, tetranormal propyl titanate, tetraisopropyl titanate, tetranormal butyl titanate, tetraisobutyl titanate, tetra-t-butyl titanate, tetraoctyl titanate, tetra (2-ethylhexyl) titanate, and tetramethyl titanate; oligomers and polymers obtained by a hydrolysis reaction of a titanium alkoxide such as a titanium butyl dimer and a titanium butyl tetramer, and derivatives thereof; titanium chelate complexes such as titanium acetylacetonate, titanium octylene glycolate, titanium tetraacetylacetonate, titanium ethyl acetoacetate, titanium triethanol aluminate, and titanium oxalate; titanium acylates such as polyhydroxy titanium stearate; and titanium tetrachloride, titanium lactate, titanium triethanol aminate, and diisopropoxy titanium bis(triethanol aminate). These titanium compounds may be used alone or two or more thereof may be used in combination.

Regarding the titanium compound, commercially available products can be used, and examples thereof include Orgatix TA-10, Orgatix TC-100, Orgatix TC-300, Orgatix TC-310, and Orgatix TC-315 (commercially available from Matsumoto Fine Chemical Co., Ltd.).

Examples of the bisazide compound include 4',4'-diazide stilbene-2-2'-disulfonic acid, 4,4'-diazide benzalacetophenone-2-sulfonic acid, 4,4'-diazide stilbene-α-carboxylic acid and salts thereof, and for example, water-soluble bisazide compounds such as sodium salts, potassium salts, and ammonium salts; and oil-soluble bisazide compounds such as p-phenylene bisazide, 4,4'-diazide benzophenone, 4,4'-diazide stilbene, 4,4'-diazidophenylmethane, 4,4'-diazide benzalacetophenone, 2,6-di-(4'-azidobenzal)cyclohexanone, and 2,6-di-(4'-azidobenzal)-4-methylcyclohexanone.

Examples of the blocked isocyanate include a compound obtained by reacting an isocyanate compound with a blocking agent.

Examples of the isocyanate compound include aromatic diisocyanates such as methyl isocyanate, ethyl isocyanate, propyl isocyanate, n-butyl isocyanate, methyl isocyanate, 2,4-tolylene diisocyanate, 2,6-tolylene diisocyanate, diphenylmethane-4,4'-diisocyanate, p-phenylene diisocyanate, xylylene diisocyanate, 1,5-naphthylene diisocyanate, 3,3'-dimethyldiphenyl-4,4'-diisocyanate, dianisidine diisocyanate, and tetramethyl xylylene diisocyanate; alicyclic diisocyanates such as isophorone diisocyanate, dicyclohexylmethane-4,4'-diisocyanate, trans-1,4-cyclohexyl diisocyanate, and norbornene diisocyanate; aliphatic diisocyanates such as 1,6-hexamethylene diisocyanate, 2,2,4-trimethylhexamethylene diisocyanate, 2,4,4-trimethylhexamethylene diisocyanate, and lysine diisocyanate; isocyanurate trimers, biuret trimers, trimethylol propane adducts and the like of the above exemplified diisocyanates; and trifunctional or higher isocyanates such as triphenylmethane triisocyanate, 1-methylbenzene-2,4,6-triisocyanate, and dimethyltriphenylmethane tetraisocyanate.

Regarding the blocking agent, those used conventionally can be used. Examples thereof include carboxylic esters such as dimethyl malonate and diethyl malonate; active methylene compounds such as malonic acid, acetylacetone, and acetoacetic esters (methyl acetoacetate, ethyl acetoacetate, etc.); oxime compounds such as formamide oxime, acetamide oxime, acetoxime, diacetyl monoxime, benzophenone oxime, cyclohexanone oxime, methyl ethyl ketoxime (MEK oxime), methyl isobutyl ketoxime (MIBK oxime), dimethyl ketoxime, and diethyl ketoxime; monohydric alcohols such as methanol, ethanol, propanol, butanol, 2-ethylhexanol, heptanol, hexanol, octanol, isononyl alcohol, stearyl alcohol, and benzyl alcohol or isomers thereof; glycol derivatives such as methyl glycol, ethyl glycol, ethyl diglycol, ethyl triglycol, butyl glycol, butyl diglycol, ethylene glycol monomethyl ether, ethylene glycol mono ethyl ether, ethylene glycol monobutyl ether, and propyleneglycol monomethyl ether; phenols such as phenol, cresol, xylenol, ethylphenol, propylphenol, butylphenol, octylphenol, nonylphenol, nitrophenol, and chlorophenol or isomers thereof; hydroxyl group-containing esters such as methyl lactate and amyl lactate; amine compounds such as dibutylamine, diisopropylamine, di-tert-butylamine, di-2-ethylhexylamine, dicyclohexylamine, benzylamine, diphenylamine, aniline, and carbazole; imine compounds such as ethylene imine and polyethyleneimine; alcohol amines such as monomethylethanolamine, diethylethanolamine, and triethylethanolamine; lactams such as α-pyrrolidone, β-butyrolactam, β-propiolactam, γ-butyrolactam, δ-valerolactam, and ε-caprolactam; mercaptans such as butyl mercaptan, hexyl mercaptan, and dodecyl mercaptan; imidazoles such as imidazole and 2-ethyl imidazole; acid amides such as acetoanilide, acrylamide, acetic acid amide, and dimer acid amide; acid imides such as succinic acid imide, maleic acid imide, and phthalic acid imide; urea compounds such as urea, thiourea, and ethylene urea; benzotriazoles; and pyrazoles such as 3, 5-dimethylpyrazole. These blocking agents may be used alone or two or more thereof may be used in combination.

Regarding the epoxy compound, a monoepoxy compound such as an aromatic epoxy compound, an alicyclic epoxy compound, and an aliphatic epoxy compound or a polyepoxy compound can be used.

Regarding the crosslinking agent, a chelate compound having a chelate type ligand that can be coordinated as a bidentate or higher-order polydentate with respect to one metal atom according to a covalent bond, a hydrogen bond, or the like can be used. When a transition metal compound has a chelate type ligand, a crosslinking reaction rate is appropriately adjusted. Specific examples of the chelate type ligand include hydroxycarboxylic acid or salts thereof, amino alcohols, and β-diketone.

An amount of the crosslinking agent added is preferably 0.01 to 3 parts by mass in terms of solid content with respect to 100 parts by mass of the water-soluble polymer so that there is no change in precipitation, thickening, and the like, and it is stable.

In the coating composition of the present invention, a conventionally known crosslinking agent can be additionally used in combination. Examples of the conventionally known crosslinking agent include polyoxazoline compounds, carbodiimide compounds, polyamines, polyols, dicyandiamide derivatives, hydrazine compounds, polyhydrazide compounds (dihydrazide, trihydrazide), aldehydes, methylol compounds, activated vinyl compounds, polyisocyanate compounds, alkylene carbonate compounds of phenolic compounds, polyvalent metal salts, and those that react at a heat drying temperature of 100°C to 120°C such as a silane coupling agent.

At least one selected from the group consisting of water-soluble polyfunctional (meth)acrylates and water-soluble polyfunctional (meth)acrylamides may be added to the coating composition of the present invention.

Examples of the water-soluble polyfunctional (meth)acrylate include polyfunctional (meth)acrylates that dissolve in water, polyfunctional (meth)acrylates that disperse in water and are emulsified and polyfunctional (meth) acrylates that dissolve in alkaline water. Examples of the structure include those having at least one group selected from the group consisting of an ethylene oxide group, a propylene oxide group, a hydroxyl group and a carboxyl group which are hydrophilic functional groups in a molecule, and those obtained by modifying ethylene oxide or those obtained by modifying propylene oxide. Here, in this specification, the term " (meth) acrylate" refers to either acrylate or methacrylate.

Examples of the water-soluble polyfunctional (meth)acrylamide include polyfunctional (meth)acrylamides that dissolve in water, polyfunctional (meth)acrylamides that disperse in water and are emulsified and polyfunctional (meth)acrylamides that dissolve in alkaline water. Here, in this specification, the term "(meth)acrylamide" refers to either acrylamide or methacrylamide.

Examples of the water-soluble polyfunctional (meth)acrylate include alkylene glycol di(meth)acrylates such as polyethylene glycol diacrylate, trimethylolpropane triacrylate ethylene glycol di(meth)acrylate, 1,4-cyclohexanedimethanol(meth)acrylate, propylene glycol di(meth)acrylate, and butylene glycol di(meth)acrylate; dialkylene glycol di(meth)acrylates such as diethylene glycol di(meth)acrylate, dipropylene glycol di(meth)acrylate, and dibutylene glycol di(meth)acrylate; trialkylene glycol di(meth)acrylates such as triethylene glycol di(meth)acrylate, tripropylene glycol di(meth)acrylate, and tributylene glycol di(meth)acrylate; tetraalkylene glycol di(meth)acrylates such as tetraethylene glycol di(meth)acrylate, tetrapropylene glycol di(meth)acrylate, and tetrabutylene glycol di(meth)acrylate; polyalkylene glycol di(meth)acrylates such as polyethylene glycol di(meth)acrylate, polypropylene glycol di(meth)acrylate, and polybutylene glycol di(meth)acrylate; and polyether tri (meth) acrylate, 1, 4-butanediol glycidyl ether di (meth) acrylate, 1,6-hexanediol glycidyl ether di(meth)acrylate, dithylene glycol diglycidyl ether di(meth)acrylate, dipropylene glycol diglycidyl ether di(meth)acrylate, carboxy-polycaprolactone mono(meth)acrylate, phthalate monohydroxyethyl(meth)acrylate, and 2-hydroxy-3-phenoxypropyl(meth)acrylate.

Examples of the water-soluble polyfunctional (meth)acrylamide include N-[tris(3-acrylamidepropoxymethyl)methyl] (meth)acrylamide, N,N'-diacryloyl-4,7,10-trioxa-1,13-tridecanediamine, N,N',N''-triacryloyl dithylene triamine, N,N'-{[2-acrylamide-2-[(3-acylamidepropoxy)methyl]propane-1,3-diyl]bis(oxy)}bis(propane-1,3-diyl)}diacrylamide, and N,N',N'',N'''-tetraacryloyltriethylenetetramine.

Among the above water-soluble polyfunctional (meth)acrylates, those having a structure represented by the following General Formula (I) are preferable because they have a high affinity to water.

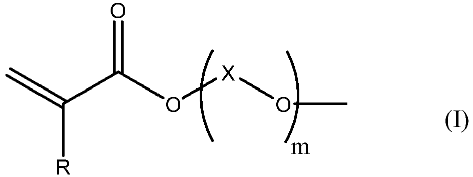

(In the formula, R represents a hydrogen atom, a methyl group or a halogen atom, X represents an alkylene group having 1 to 6 carbon atoms, and m is a number of 1 to 30.)

In General Formula (I), examples of an alkylene group having 1 to 6 carbon atoms include methylene, ethylene, propylene, butylene, and isobutylene.

In General Formula (I), m is preferably 5 to 20 so that the affinity to water is high.

Among the above water-soluble polyfunctional (meth)acrylamides, those having a structure represented by the following General Formula (II) are preferable because they have a high affinity to water.

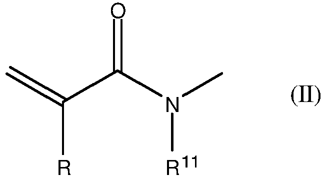

(In the formula, R is the same as that in General Formula (I), and R¹¹ represents a hydrogen atom or an alkyl group having 1 to 4 carbon atoms.)

Regarding the water-soluble polyfunctional (meth)acrylate, commercially available products can be used, and examples thereof include hydroxyethyl(meth)acrylate, 1,4-cyclohexane dimethanol(meth)acrylate, A-GLY-9E, A-GLY-20E, A-600, A-1000, A-BPE-30, ATM-35E, A-PG5027E, A-PG5054E, 14G, GLY-9E, and GLY-20E (commercially available from Shin Nakamura Chemical Co., Ltd.), PEG400DA-D and EBECRYL 11 (commercially available from Daicel-Allnex Ltd.), 9EG-A and 14EG-A (commercially available from Kyoeisha Chemical Co., Ltd.).

Examples of the water-soluble polyfunctional (meth)acrylamide include hydroxyethyl(meth)acrylamide, (meth)acryloyl morpholine, diethyl(meth)acrylamide, dimethylaminopropyl(meth)acrylamide FFM-2, FFM-3, FFM-4, and FFM-5 (commercially available from Fujifilm Corporation).

An organic acid can be additionally added to the coating composition of the present invention. Regarding the organic acid, any organic acid can be used without limitation as long as it is a weakly acidic compound having a carboxyl group, and examples thereof include nitric acid, acetic acid, citric acid, malic acid, lactic acid, glycolic acid, carbonic acid, formic acid, oxalic acid, propionic acid, octylic acid, caprylic acid, glucuronic acid, stearic acid, and benzoic acid.

An amount of the organic acid added is preferably 0.01 to 1 parts by mass in terms of solid content with respect to 100 parts by mass of the water-soluble polymer so that there is no change in precipitation, phase separation, thickening, and the like.

When an organic base is added to the coating composition of the present invention to adjust pH, it is possible to control the reaction and improve storage stability. Examples of the organic base include an amine compound and an imine compound.

A metal component derived from a crosslinking agent may be contained in the coating composition of the present invention, and the metal content in terms of solid content in the coating composition is 0.01 to 3 mass% and preferably 0.1 to 2 mass%.

A coupling agent, a sensitizer, a surfactant, a photopolymerization initiator, and the like can be added to the coating composition of the present invention as necessary.

Regarding the coupling agent, alkyl functional alkoxysilanes such as dimethyldimethoxysilane, dimethyldiethoxysilane, methylethyldimethoxysilane, methylethyldiethoxysilane, methyltrimethoxysilane, methyltriethoxysilane, ethyltrimethoxysilane, and ethyltrimethoxysilane; alkenyl functional alkoxysilanes such as vinyltrichlorosilane, vinyltrimethoxysilane, vinyltriethoxysilane, and allyl trimethoxysilane; epoxy functional alkoxysilanes such as 3-methacryloxypropyltriethoxysilane, 3-methacryloxypropyltrimethoxysilane, 3-methacryloxypropylmethyldiethoxysilane, 3-methacryloxypropylmethyldimethoxysilane, 2-methacryloxypropyltrimethoxysilane, γ-glycidoxypropyltrimethoxysilane, γ-glycidoxypropylmethyldiethoxysilane, and β-(3,4-epoxycyclohexyl)ethyltrimethoxysilane; aminofunctional alkoxysilanes such as N-β(aminoethyl)-γ-aminopropyltrimethoxysilane, γ-aminopropyltriethoxysilane, and N-phenyl-γ-aminopropyltrimethoxysilane; mercapto functional alkoxysilanes such as γ-mercaptopropyltrimethoxysilane; titanium alkoxides such as titanium tetraisopropoxide and titanium tetranormal butoxide; titanium chelates such as titanium dioctyloxy bis(octylene glycolate), and titanium diisopropoxy bis(ethyl acetoacetate); zirconium chelates such as zirconium tetraacetylacetonate and zirconium tributoxy monoacetylacetonate; zirconium acylates such as zirconium tributoxy monostearate; and isocyanate silanes such as methyl triisocyanate silane, or the like can be used.

The sensitizer is a compound that can extend an applicable wavelength range of light when it is cured due to light emission, and examples thereof include benzophenones such as benzophenone, 3-hydroxybenzophenone, 4-hydroxybenzophenone, 4,4-dihydroxybenzophenone, 2-methyl benzophenone, 3-methyl benzophenone, 4-methyl benzophenone, 2,5-dimethylbenzophenone, 3,4-dimethylbenzophenone, 4-methoxybenzophenone, 4,4-dimethoxybenzophenone,3,3-dimethyl-4-methoxybenzophenone, and 4-phenylbenzophenone; acetophenones such as acetophenone, 4-methoxyacetophenone, 2,4-dimethoxyacetophenone, 2,5-dimethoxyacetophenone, 2,6-dimethoxyacetophenone, 4,4-dimethoxyacetophenone, 4-ethoxyacetophenone, diethoxyacetophenone, 2,2-diethoxyacetophenone, 2-ethoxy-2-phenylacetophenone, and 4-phenylacetophenone; anthraquinones such as anthraquinone, hydroxyanthraquinone, 1-nitroanthraquinone, aminoanthraquinone, 2-chloroanthraquinone, 2-methylanthraquinone, 2-ethyl anthraquinone, anthraquinone sulfonic acid, 1,2-benzanthraquinone, and 1,4-hydroxyanthraquinone (quinizarin); anthracenes such as anthracene, 1,2-benzoanthracene, 9-cyanoanthracene, 9,10-dicyanoanthracene, 2-ethyl-9,10-dimethoxyanthracene, and 9,10-bis(phenylethyl)anthracene; quinones such as 2,3-dichloro-6-dicyano-p-benzoquinone, 2,3-dimethoxy-5-methyl-1,4-benzoquinone, methoxybenzoquinone, 2,5-dichloro-p-benzoquinone, 2,6-dimethyl-1,4-benzoquinone, 9,10-phenanthlequinone, camphorquinone, 2,3-dichloro-1,4-naphthoquinone, and xanthone; thioxanes such as thioxanthone, 2-methylthioxanthone, 2,4-dimethylthioxanthone, isopropylthioxanthone, 2,4-diethylthioxanthone, and 2,4-isopropylthioxanthone; cycloheptanes such as dibenzosuberone, dibenzosuberene, dibenzosuberenol, and dibenzosuberan; aromatic compounds such as 2-methoxynaphthalene, benzoin isopropyl ether, 4-benzoyldiphenyl, o-benzoylbenzoic acid, o-benzoyl methyl benzoate, 4-benzoyl-4-methyl-diphenyl sulfide, benzyl, and benzoin methyl ether; and coumarin, thiazine, azine, acridine, and xanthene compounds which are dye-based sensitizing substances.

Regarding the surfactant, a fluorine surfactant such as perfluoroalkyl phosphate ester, and perfluoroalkyl carboxylate; an anionic surfactant such as a higher fatty acid alkali salt, alkyl sulfonate, and alkyl sulfate; a cationic surfactant such as a higher amine halide and aquaternary ammonium salt; a non-ionic surfactant such as polyethylene glycol alkyl ether, polyethylene glycol fatty acid ester, sorbitan fatty acid ester, and fatty acid monoglyceride; and a surfactant such as an amphoteric surfactant and a silicone surfactant, or the like can be used. These surfactants may be used in combination.

Regarding the photopolymerization initiator, a conventionally known compound can be used. For example, in addition to those described in JP S57-197289 A, JP H06-228218 A, JP 2009-102455 A, JP 2012-007071 A, JP 2016-510314 A, WO 2014/050551, JP H06-239910 A, JP 2003-192712 A, and JP 2016-185929 A, hydrogen-drawing type photopolymerization initiators such as benzophenone, thioxanthone, 1-chloro-4-propoxythioxanthone, isopropyl thioxanthone, diethyl thioxanthone, and ethyl anthraquinone; and photodegradable photopolymerization initiators such as phenyl biphenyl ketone, 1-hydroxy-1-benzoyl cyclohexane(α-hydroxyalkylphenone), benzoin, benzyl dimethyl ketal, 1-benzyl-1-dimethylamino-1-(4'-morpholinobenzoyl)propane, 2-morpholine-2-(4'-methylmercapto)benzoylpropane, 4-benzoyl-4'-methyl diphenyl sulfide, benzoin butyl ether, 2-hydroxy-2-benzoylpropane, 2-hydroxy-2-(4'-isopropyl)benzoylpropane, 4-butylbenzoyl trichloromethane, 4-phenoxy benzoyl dichloromethane, methyl benzoyl formate, 1-hydroxy-cyclohexyl-phenyl-ketone, 2-hydroxy-2-methyl-1-phenyl-propan-1-one, 1-[4-(2-hydroxyethoxy)-phenyl]-2-hydroxy-2-methyl-1-propan-1-o ne, 1,7-bis(9'-acridinyl)heptane, 9-n-butyl-3,6-bis(2'-morpholinoisobutyryl)carbazole, 2-methyl-4,6-bis(trichloromethyl)-s-triazine, 2-phenyl-4,6-bis(trichloromethyl)-s-triazine, 2-naphthyl-4,6-bis(trichloromethyl)-s-triazine, 2,2-bis(2-chlorophenyl)-4,5,4',5'-tetraphenyl-1-2'-biimidazole, acyl phosphine oxide, bisacyl phosphine oxide, and triphenyl phosphine oxide can be used, and the photodegradable photopolymerization initiator is preferable in consideration of the reactivity.

Among the above photodegradable photopolymerization initiators, water-soluble initiators such as IRGACURE 2959, IRGACURE 819DW (commercially available from BASF), ESACURE ONE, ESACURE 1001M, ESACURE KIP 150, and ESACURE DP 250 (commercially available from Lamberti) are preferable because they have a high affinity to water.

In addition, as long as effects of the present invention are not impaired, as necessary, various resin additives, for example, a thermal polymerization initiator, a photobase initiator, an inorganic filler, an organic filler, a colorant such as a pigment and a dye, an anti-foaming agent, a thickener, a leveling agent, an organometallic capping agent, a thixotropic agent, a carbon compound, fine metal particles, a metal oxide, a flame retardant, a plasticizer, a light stabilizer, a heat stabilizer, an anti-aging agent, elastomer particles, a chain transfer agent, a polymerization inhibitor, a UV light absorber, an antioxidant, an antistatic agent, a release agent, a flow control agent, an adhesion promoter, a water-soluble preservative, a conductive substance, and an unsaturated monomer, can be added.

The coating composition of the present invention may contain a solvent. Regarding the solvent, water is preferable, only water is preferably used as the solvent because it has a low environmental burden and it does not influence an organic material when applied to the organic material. Regarding the solvent, an organic solvent can be additionally used in combination.

Examples of the organic solvent include ketones such as methyl ethyl ketone, methyl amyl ketone, diethyl ketone, acetone, methyl isopropyl ketone, methyl isobutyl ketone, cyclohexanone and 2-heptanone; ether solvents such as ethyl ether, dioxane, tetrahydrofuran, 1,2-dimethoxyethane, 1,2-diethoxyethane and dipropylene glycol dimethyl ether; ester solvents such as methyl acetate, ethyl acetate, n-propyl acetate, isopropyl acetate, n-butyl acetate, cyclohexyl acetate, ethyl lactate, dimethyl succinate and texanol; cellosolve solvents such as ethylene glycol monomethyl ether and ethylene glycol mono ethyl ether; alcohol solvents such as methanol, ethanol, iso- or n-propanol, iso- or n-butanol and amyl alcohol; ether ester solvents such as ethylene glycol monomethyl acetate, ethylene glycol monoethyl acetate, propyleneglycol-1-monomethyl ether (PGM), propyleneglycol-1-monomethyl ether-2-acetate (PGMEA), dipropylene glycol monomethyl ether acetate, 3-methoxybutyl acetate and ethoxyethyl propionate; BTX solvents such as benzene, toluene and xylene; aliphatic hydrocarbon solvents such as hexane, heptane, octane and cyclohexane; terpene hydrocarbon oils such as turpentine oil, D-limonene and pinene; paraffin solvents such as mineral spirit, Swasol #310 (commercially available from Cosmo Matsuyama Oil Co., Ltd.) and Solvesso #100 (commercially available from ExxonMobil Chemical); halogenated aliphatic hydrocarbon solvents such as carbon tetrachloride, chloroform, trichloroethylene, methylene chloride and 1,2-dichloroethane; halogenated aromatic hydrocarbon solvents such as chlorobenzene; and carbitol-based solvent, aniline, triethylamine, pyridine, acetic acid, acetonitrile, carbon disulfide, N,N-dimethylformamide, N,N-dimethylacetamide, N-methyl pyrrolidone, and dimethyl sulfoxide. An alcohol solvent is preferable because it has favorable compatibility with water.

The coating composition of the present invention is applied to a support base made of glass, metal, paper, plastic, or the like using a spin coater, a bar coater, a roll coater, a curtain coater, various types of printing, known methods such as immersing, or the like. In addition, the coating composition of the present invention can be applied to a support base such as a film once and then transferred to another support base. The application method is not limited.

Examples of materials of a transparent support base include inorganic materials such as glass; cellulose esters such as diacetyl cellulose, triacetyl cellulose (TAC), propionyl cellulose, butyryl cellulose, acetyl propionyl cellulose, and nitrocellulose; polyamide; polycarbonate; polyesters such as polyethylene terephthalate, polyethylene naphthalate, polybutylene terephthalate, poly-1,4-cyclohexanedimethylene terephthalate, polyethylene-1,2-diphenoxyethane-4,4'-dicarboxylate, and polybutylene terephthalate; polystyrene; polyolefins such as polyethylene, polypropane, and polymethylpentene; acrylic resins such as polymethyl methacrylate; polycarbonate; polysulfone; polyether sulfone; polyether ketone; polyether imide; and polymer materials such as polyoxyethylene and norbornene resin. The transmittance of the transparent support base is preferably 80% or more and more preferably 86% or more. The haze is preferably 2% or less and more preferably 1% or less. The refractive index is preferably 1.45 to 1.70.

When the coating composition of the present invention is applied to a transparent support base and then cured according to light emission, light emission conditions such as wavelength and intensity of light emitted and light emission time are appropriately adjusted according to the activity of a photoinitiator, the activity of a photopolymerizable resin used, and the like. Generally, in order to allow sufficient light to enter the inside, a light wavelength having a wavelength peak of 350 to 400 nm is preferable and a light wavelength having a wavelength peak of 360 to 380 nm is more preferable. In addition, the light intensity is preferably 1 to 500 mW/cm² and more preferably 5 to 300 mW/cm², and the light emission time is preferably 1 to 500 seconds and more preferably 5 to 300 seconds.

When the coating composition of the present invention is applied to a transparent support base and then cured according to heating, heating is performed at 50°C to 200°C, and preferably, at 70°C to 150°C, for 10 seconds to 1 hour. There is a risk of the crosslinking reaction not occurring when the temperature is lower than 50°C. On the other hand, when the temperature is higher than 200°C, there is a risk of the water-soluble polymer decomposing and the transparency of an optical film being reduced.

Examples of specific applications of the coating composition of the present invention include optical materials represented by eye glasses and imaging lenses, antistatic film, optical film, conductive film, protective film, heat ray shielding material, transfer foil, printing plate, insulation varnish, insulating sheet, laminated plate, print substrate, flexible display substrate, touch panel substrate, printing mask, molding material, putty, building material, fingernail material, cosmetics, siding, glass fiber impregnating agent, filler, passivation film for semiconductors, solar cells, and the like, interlayer insulation film, protection film, prism lens sheet used for the backlight of a liquid crystal display, Fresnel lens sheet used for the screen of a projection television and the like, lens part of a lens sheet such as a lenticular lens sheet or a backlight using such a sheet, protection film and spacer of a liquid crystal color filter, DNA separation chip, micro reactor, nano-bio device, hard disk recording material, solid-state image sensor, solar cell panel, light emitting diode, organic light emitting device, electrode protection material, luminescent film, fluorescent film, MEMS element, actuator, hologram, plasmon device, polarizing plate, polarizing film, alignment film, optical lens such as micro lens, an optical element, phase difference film, optical connector, optical waveguide, optical modeling casting agent, food and beverage container, food packaging material, dental material, sanitary ware, and housing equipment such as bathtubs. Examples of a base material that can be applied as a coating agent include metal, wood, rubber, plastic, glass, ceramic product, paper, and cloth.

Since the coating composition of the present invention can form a cured product having excellent transparency, it is beneficial for an optical element represented by phase difference film, optical waveguide, optical lens, or the like. In particular, since the coating composition of the present invention can form a cured product with a small phase difference, it is beneficial for a phase difference film. In particular, since the coating composition of the present invention can form a cured product with low transmission loss, it is beneficial for an optical waveguide.

When the coating composition of the present invention is impregnated into cloth or paper and cured, it is possible to impart water resistance, rigidity, and the like.

When a patterned cured product is produced from the coating composition of the present invention, it can be produced by the following method.

In a method of producing a patterned cured product, in a process (1), a single layer including a plurality of compositions having different solubilities with respect to a developing solution is applied to a support base, and subsequently, in a process (2), an active energy ray is emitted to a predetermined part of a coating for exposure, and in a process (3), the coating is repeatedly treated with a plurality of developing solutions.

In another method of producing a patterned cured product, a series of steps of performing a process (1), a process (2) and a process (3) is repeated a plurality of times, and a composition in the process (1) has different solubility with respect to a developing solution for each of the series of steps, and a developing solution used for developing in the process (3) is different for each of the series of steps.

In still another method of producing a patterned cured product, in a process (1), a lower layer including a composition is applied to a support base and dried, and subsequently, a film obtained from a composition is laminated as an upper layer to form a coating, and compositions constituting the upper layer and the lower layer have different solubilities with respect to the developing solution. Subsequently, in a process (2), an active energy ray is emitted to a predetermined part of the coating for exposure, and in a process (3), the coating is repeatedly treated with a plurality of developing solutions.

In a method of producing a patterned cured product of the present invention, a heating process may be performed after a coating is formed in the process (1), before exposure in the process (2) as procuring, or after developing is performed in the process (3) as post curing.

Heating can be performed by placing a laminate on a hot plate and raising the temperature, by using a heating device such as a thermal head or a clean oven, and using a proximity method, an adsorption method, a conveyor method, or the like, or using a combination thereof.

Heating is performed at 50°C to 200°C for several seconds to 1 hour.

Regarding the above method of application, known methods can be used, and for example, a curtain coating method, an extrusion coating method, a roll coating method, a spin coating method, a dip coating method, a bar coating method, a die coater, a curtain coater, a spray coating method, a slide coating method, a blade coating method, a gravure coating method, and a printing coating method such as screen printing, various types of printing such as an electrostatic coating method, or known methods such as immersing can be used.

Regarding the film, a film that is obtained by applying a composition to another support, and performing drying, and then released from the support can be used. For example, a dry film can be used.

Examples of the support include cellulose esters such as diacetyl cellulose, triacetyl cellulose (TAC), propionyl cellulose, butyryl cellulose, acetyl propionyl cellulose, and nitrocellulose; polyamide; polycarbonate; polyesters such as polyethylene terephthalate, polyethylene naphthalate, polybutylene terephthalate, poly-1,4-cyclohexanedimethylene terephthalate, polyethylene-1,2-diphenoxyethane-4,4'-dicarboxylate, and polybutylene terephthalate; polystyrene; polyolefins such as polyethylene, polypropane, and polymethylpentene; acrylic resins such as polymethyl methacrylate; polycarbonate; polysulfone; polyether sulfone; polyether ketone; polyether imide; and polymer materials such as polyoxyethylene and norbornene resin, and metal, wood, rubber, plastic, soda glass, quartz glass, ceramic product, paper, cloth, canvas, semiconductor substrate, or the like.

### Examples

While the present invention will be described below in more detail with reference to examples and the like, the present invention is not limited to these examples.

Hereinafter, a coating composition of the present invention and a cured product obtained from the coating composition will be described in detail with reference to production examples, examples, evaluation examples and comparative examples.

### [Examples 1 to 31 and Comparative Examples 1 to 7]

### <Preparation of water-soluble polymer aqueous solution>

First, while 900.0 g of deionized water was stirred at room temperature, 100.0 g of a water-soluble polymer according to any of the following A-1 to A-6 was gradually added. After stirring at room temperature for 10 minutes, heating was performed until the internal temperature reached 85°C to 90°C, and stirring continued at the temperature for 1 hour. After dissolution was confirmed, the temperature was cooled to room temperature. A prepared aqueous solution was filtered through a 1 µm filter and water-soluble polymer aqueous solutions containing the following PV-1 to PV-6 were obtained.
A-1: Gohsenol NL-05 (with a degree of saponification of 99) commercially available from The Nippon Synthetic Chemical Industry Co., Ltd.
A-2: Gohsenol GL-05 (with a degree of saponification of 87) commercially available from The Nippon Synthetic Chemical Industry Co., Ltd.
A-3: Gohsenx Z-200 (with a degree of saponification 98) commercially available from The Nippon Synthetic Chemical Industry Co., Ltd.
A-4: Gohsenx Z-300 (with a degree of saponification 98) commercially available from The Nippon Synthetic Chemical Industry Co., Ltd.
A-5: Gohsenx Z-100 (with a degree of saponification 99) commercially available from The Nippon Synthetic Chemical Industry Co., Ltd.
A-6: Gohsenx Z-220 (with a degree of saponification 92) commercially available from The Nippon Synthetic Chemical Industry Co., Ltd.

PV-1: Aqueous solution containing A-1
PV-2: Aqueous solution containing A-2
PV-3: Aqueous solution containing A-3
PV-4: Aqueous solution containing A-4
PV-5: Aqueous solution containing A-5
PV-6: Aqueous solution containing A-6

### <Preparation of coating composition>

Components shown in the following Tables 1 to 6 were mixed and stirred at room temperature for 1 hour and then filtered through a 1 µm filter, to thereby obtain the coating compositions of examples and comparative examples. Here, details of components in Table 1 to Table 6 are as follows. Amounts of components added and total amounts are based on mass. Here, amounts of PV-1 to PV-11 added are amounts in terms of solid content.
PV-7: Aqueous solution containing 10 mass% polyvinylpyrrolidone K-90 (commercially available from Nippon Shokubai Co., Ltd.)
PV-8: Aqueous solution in which N-methylol acrylamide was reacted with Gohsenol GL-05 to reach 3.0 mol% with respect to an amount of hydroxyl groups of polyvinyl alcohol, and the solid content was adjusted to 10 mass%
PV-9: Aqueous solution in which N-methylol acrylamide was reacted with G-Polymer OKS-1083 to reach 2.5 mol% with respect to an amount of hydroxyl groups of polyvinyl alcohol, and the solid content was adjusted to 10 mass%
PV-10: Aqueous solution in which formyl styryl pyridinium was reacted with G-Polymer OKS-1083 to reach 3.4 mol% with respect to an amount of hydroxyl groups of polyvinyl alcohol, and the solid content was adjusted to 10 mass%
PV-11: Aqueous solution in which formyl styryl pyridinium was reacted with Gohsenol GL-05 to reach 3.4 mol% with respect to an amount of hydroxyl groups of polyvinyl alcohol, and the solid content was adjusted to 10 mass%

B-1: Orgatix TA-10 (commercially available from Matsumoto Fine Chemical Co., Ltd.; tetraisopropyl titanate, component concentration 99%, Ti content 17%)
B-2: Orgatix TC-100 (commercially available from Matsumoto Fine Chemical Co., Ltd.; titanium acetylacetonate, 2-propanol solution (solvent-based chelate), component concentration 75%, Ti content 10%)
B-3: Orgatix TC-315 (commercially available from Matsumoto Fine Chemical Co., Ltd.; titanium lactate, aqueous solution (water-based chelate), component concentration 44%, Ti content 8%)
B-4: Orgatix ZC-700 (commercially available from Matsumoto Fine Chemical Co., Ltd.; zirconium tetraacetylacetonate toluene/methanol solution (solvent-based chelate), component concentration 20%, Zr content 4%)
B-5: Orgatix ZC-126 (commercially available from Matsumoto Fine Chemical Co., Ltd.; aqueous solution containing zirconium oxychloride (water-based chelate), component concentration 30%, Zr content 11%)
B-6: Zircozol ZN (commercially available from Daiichi Kigenso Kagaku Kogyo Co., Ltd.; aqueous solution containing zirconium oxynitrate, component concentration 46%, Zr content 25%)
B-7: Zircozol AC-7 (commercially available from Daiichi Kigenso Kagaku Kogyo Co., Ltd.; aqueous solution containing zirconium carbonate ammonium, component concentration 30%, Zr content 13%)
B-8: Zircozol ZA-20 (commercially available from Daiichi Kigenso Kagaku Kogyo Co., Ltd.; aqueous solution containing zirconium oxyacetate, component concentration 35%, Zr content 20%)
B-9: Orgatix WS-700 (commercially available from Matsumoto Fine Chemical Co., Ltd.; organic titanium-modified polyethyleneimine, component concentration 15%, Ti content 5%)
B-10: Epocros WS-700 (commercially available from Nippon Shokubai Co., Ltd.; oxazoline compound, solid content 25 mass%)

C-1: DL-lactic acid
C-2: Citric acid
C-3: Acetic acid
C-4: Glycolic acid
D-1: 5% ammonia water
D-2: Triethylamine
D-3: 2.38% TMAH aqueous solution
D-4: Polyethyleneimine 70000 (commercially available from Junsei Chemical Co., Ltd., 30% aqueous solution)

E-1: Aqueous solution containing 10% hydroxypropyl cellulose NISSO HPC L (commercially available from Nippon Soda Co., Ltd.)
E-2: Pesresin A-690 (hydrophilic group: COOH, solid content 20 mass%, acid number 50 mgKOH/g) commercially available from Takamatsu Oil & Fat Co., Ltd.
E-3: Polyester W-1031 (hydrophilic group: COOH, solid content 30 mass%, acid number 80 mgKOH/g) commercially available from The Nippon Synthetic Chemical Industry Co., Ltd.

F-1: NK ester A-600 (water-soluble polyfunctional acrylate) commercially available from Shin Nakamura Chemical Co., Ltd.
F-2: NK ester A-GLY-20E (water-soluble polyfunctional acrylate) commercially available from Shin Nakamura Chemical Co., Ltd.
F-3: NK economer A-PG5054E (water-soluble polyfunctional acrylate) commercially available from Shin Nakamura Chemical Co., Ltd.
F-4: FFM-3 (water-soluble polyfunctional acrylamide) commercially available from Fujifilm Corporation
F-5: Hydroxyethyl acrylamide (HEAA) (water-soluble monofunctional acrylamide) commercially available from KJ Chemicals Corporation

G-1: IRGACURE 2959 commercially available from BASF
G-2:
   N,N-bis(2-hydroxyethyl)butane-1-aminium=phenyl(2,4,6-trimethyl benzoyl)phosphinate

**Table 1**

| | Example 1 | Example 2 | Example 3 | Example 4 | Example 5 | Example 6 | Example 7 |
|---|---|---|---|---|---|---|---|
| PV-1 | | | | | | | |
| PV-2 | | | | | | | |
| PV-3 | 100 | 100 | 100 | 100 | 100 | 100 | 100 |
| PV-4 | | | | | | | |
| PV-5 | | | | | | | |
| PV-6 | | | | | | | |
| PV-7 | | | | | | | |
| PV-8 | | | | | | | |
| PV-9 | | | | | | | |
| PV-10 | | | | | | | |
| PV-11 | | | | | | | |
| B-1 | | | | | | | |
| B-2 | 0.2 | | | | | | |
| B-3 | | 0.24 | | | | | |
| B-4 | | | 0.54 | | | | |
| B-5 | | | | 0.18 | | | |
| B-6 | | | | | 0.08 | | |
| B-7 | | | | | | 0.15 | |
| B-8 | | | | | | | 0.1 |
| B-9 | | | | | | | |
| B-10 | | | | | | | |
| C-1 | | | | | | | |
| C-2 | | | | | | | |
| C-3 | | | | | | | |
| C-4 | | | | | | | |
| D-1 | | | | | | | |
| D-2 | | | | | | | |
| D-3 | | | | | | | |
| D-4 | | | | | | | |
| E-1 | | | | | | | |
| E-2 | | | | | | | |
| E-3 | | | | | | | |
| F-1 | | | | | | | |
| F-2 | | | | | | | |
| F-3 | | | | | | | |
| F-4 | | | | | | | |
| F-5 | | | | | | | |
| G-1 | | | | | | | |
| G-2 | | | | | | | |
| Total amount | 100.2 | 100.24 | 100.54 | 100.18 | 100.08 | 100.15 | 100.1 |
| Compatibility | ○ | ○ | ○ | ○ | ○ | ○ | ○ |
| Uniformity | ○ | ○ | ○ | ○ | ○ | ○ | ○ |
| Durability | Δ | Δ | ○ | ○ | ○ | ○ | ○ |
| Liquid crystal contamination | Δ | ○ | ○ | ○ | ○ | ○ | ○ |
| Transparency | >95 | >95 | >95 | >95 | >95 | >95 | >95 |
| Phase difference | <5 | <5 | <5 | <5 | <5 | <5 | <5 |

**Table 2**

| | Example 8 | Example 9 | Example 10 | Example 11 | Example 12 | Example 13 | Example 14 |
|---|---|---|---|---|---|---|---|
| PV-1 | | | | | | | |
| PV-2 | | | | | | | |
| PV-3 | 100 | 100 | | 50 | | | 20 |
| PV-4 | | | 100 | | 100 | 30 | |
| PV-5 | | | | 50 | | 70 | 80 |
| PV-6 | | | | | | | |
| PV-7 | | | | | | | |
| PV-8 | | | | | | | |
| PV-9 | | | | | | | |
| PV-10 | | | | | | | |
| PV-11 | | | | | | | |
| B-1 | | | | | | | |
| B-2 | | | | | | | |
| B-3 | | | | | | | 0.96 |
| B-4 | | | | | | | |
| B-5 | 0.18 | 0.18 | | 0.18 | | | 0.54 |
| B-6 | | 0.08 | 0.16 | 0.08 | 0.08 | | |
| B-7 | | | | | | | |
| B-8 | | | | | | 0.5 | |
| B-9 | | | | | | | |
| B-10 | | | | | | | |
| C-1 | 0.01 | | | 0.02 | | | |
| C-2 | | | 0.02 | | | | |
| C-3 | | | | | | 0.01 | |
| C-4 | | | | | 0.01 | | |
| D-1 | | | | | | | |
| D-2 | | | | | | | |
| D-3 | | | | | | | |
| D-4 | | | | | | | |
| E-1 | | | | | | | |
| E-2 | | | | | | | |
| E-3 | | | | | | | |
| F-1 | | | | | | | |
| F-2 | | | | | | | |
| F-3 | | | | | | | |
| F-4 | | | | | | | |
| F-5 | | | | | | | |
| G-1 | | | | | | | |
| G-2 | | | | | | | |
| Total amount | 100.19 | 100.26 | 100.18 | 100.28 | 100.09 | 100.51 | 101.5 |
| Compatibility | ○ | ○ | ○ | ○ | ○ | ○ | ○ |
| Uniformity | ○ | ○ | ○ | ○ | ○ | ○ | ○ |
| Durability | ○ | ○ | ○ | ○ | ○ | ○ | ○ |
| Liquid crystal contamination | ○ | ○ | ○ | ○ | Δ | ○ | ○ |
| Transparency | >95 | >95 | >95 | >95 | >95 | >95 | >95 |
| Phase difference | <5 | <5 | <5 | <5 | <5 | <5 | <5 |

**>95Table 3**

| | Example 15 | Example 16 | Example 17 | Example 18 | Example 19 | Example 20 | Example 21 |
|---|---|---|---|---|---|---|---|
| PV-1 | 30 | | | | | | |
| PV-2 | 20 | | | | | | |
| PV-3 | 50 | | 100 | | 100 | 100 | 80 |
| PV-4 | | | | | | | |
| PV-5 | | 100 | | 100 | | | |
| PV-6 | | | | | | | |
| PV-7 | | | | | | | 20 |
| PV-8 | | | | | | | |
| PV-9 | | | | | | | |
| PV-10 | | | | | | | |
| PV-11 | | | | | | | |
| B-1 | | 0.12 | | | | | |
| B-2 | | | | | | | |
| B-3 | | | | | | | |
| B-4 | | | | | | | |
| B-5 | 0.9 | | 0.16 | 0.16 | 0.16 | 0.16 | 0.18 |
| B-6 | | | 0.15 | 0.15 | 0.15 | 0.15 | 0.08 |
| B-7 | | | | | | | |
| B-8 | | | | | | | |
| B-9 | | | | | | | |
| B-10 | | | | | | | |
| C-1 | | | 0.03 | 0.03 | 0.03 | 0.03 | 0.03 |
| C-2 | | | | | | | |
| C-3 | | | | | | | |
| C-4 | | | | | | | |
| D-1 | | | 0.25 | | | | 0.25 |
| D-2 | | | | 0.01 | | | |
| D-3 | | | | | 0.25 | | |
| D-4 | | | | | | 0.1 | |
| E-1 | | | | | | | |
| E-2 | | | | | | | |
| E-3 | | | | | | | |
| F-1 | | | | | | | |
| F-2 | | | | | | | |
| F-3 | | | | | | | |
| F-4 | | | | | | | |
| F-5 | | | | | | | |
| G-1 | | | | | | | |
| G-2 | | | | | | | |
| Total amount | 100.9 | 100.12 | 100.59 | 100.35 | 100.59 | 100.44 | 100.54 |
| Compatibility | ○ | Δ | ○ | ○ | ○ | ○ | ○ |
| Uniformity | ○ | Δ | ○ | ○ | ○ | ○ | ○ |
| Durability | ○ | ○ | ○ | ○ | Δ | ○ | ○ |
| Liquid crystal contamination | ○ | Δ | ○ | ○ | ○ | ○ | ○ |
| Transparency | >95 | >95 | >95 | >95 | >95 | >95 | >95 |
| Phase difference | <5 | <5 | <5 | <5 | <5 | <5 | <5 |

**Table 4**

| | Example 22 | Example 23 | Example 24 | Example 25 | Example 26 | Example 27 | Example 28 |
|---|---|---|---|---|---|---|---|
| PV-1 | | | | | | | |
| PV-2 | | | | | | | |
| PV-3 | 80 | 100 | 100 | 90 | 50 | | |
| PV-4 | | | | | 35 | | |
| PV-5 | | | | | | | |
| PV-6 | | | | | | | |
| PV-7 | | | | | | | |
| PV-8 | | | | | | 40 | 50 |
| PV-9 | | | | | | 40 | 30 |
| PV-10 | | | | | | | |
| PV-11 | | | | | | | |
| B-1 | | | | | | | |
| B-2 | | | | | | | |
| B-3 | | | 0.1 | | | | |
| B-4 | | | | | | | |
| B-5 | 0.18 | 0.16 | 0.16 | 0.1 | 0.1 | 0.1 | |
| B-6 | 0.08 | 0.08 | 0.08 | | | 0.1 | |
| B-7 | | | | | | | |
| B-8 | | | | | | | |
| B-9 | | 0.1 | | | | | 0.1 |
| B-10 | | | | 1 | 2 | | |
| C-1 | 0.03 | 0.03 | 0.03 | | | | |
| C-2 | | | | | | | |
| C-3 | | | | | | | |
| C-4 | | | | | | | |
| D-1 | 0.25 | 0.25 | 0.25 | | | | |
| D-2 | | | | | | | |
| D-3 | | | | | | | |
| D-4 | | | 0.1 | | | | |
| E-1 | 20 | | | | | | |
| E-2 | | | | 10 | | | |
| E-3 | | | | | 10 | | |
| F-1 | | | | | | 5 | |
| F-2 | | | | | | 5 | |
| F-3 | | | | | | 10 | |
| F-4 | | | | | | | 10 |
| F-5 | | | | | | | 10 |
| G-1 | | | | | | 5 | |
| G-2 | | | | | | | 5 |
| Total amount | 100.54 | 100.62 | 100.72 | 101.1 | 97.1 | 105.2 | 105.1 |
| Compatibility | ○ | ○ | ○ | Δ | Δ | Δ | ○ |
| Uniformity | ○ | ○ | ○ | ○ | ○ | ○ | ○ |
| Durability | ○ | ○ | ○ | Δ | ○ | ○ | ○ |
| Liquid crystal contamination | ○ | ○ | ○ | ○ | Δ | ○ | ○ |
| Transparency | >95 | >95 | >95 | >95 | >95 | >95 | >95 |
| Phase difference | <5 | <5 | <5 | <5 | <5 | <5 | <5 |

**Table 5**

| | Example 29 | Example 30 | Example 31 |
|---|---|---|---|
| PV-1 | | | |
| PV-2 | | | 90 |
| PV-3 | 90 | | |
| PV-4 | | 40 | |
| PV-5 | | 40 | |
| PV-6 | | | |
| PV-7 | | | |
| PV-8 | | | |
| PV-9 | | | |
| PV-10 | 10 | | 10 |
| PV-11 | | 20 | |
| B-1 | | | |
| B-2 | | | |
| B-3 | | | |
| B-4 | | | |
| B-5 | 0.15 | 0.13 | 0.15 |
| B-6 | 0.14 | 0.13 | 0.14 |
| B-7 | | | |
| B-8 | | | |
| B-9 | | | |
| B-10 | | | |
| C-1 | 0.03 | 0.02 | 0.03 |
| C-2 | | | |
| C-3 | | | |
| C-4 | | | |
| D-1 | 0.23 | 0.2 | 0.23 |
| D-2 | | | |
| D-3 | | | |
| D-4 | | | |
| E-1 | | | |
| E-2 | | | |
| E-3 | | | |
| F-1 | | | |
| F-2 | | | |
| F-3 | | | |
| F-4 | | | |
| F-5 | | | |
| G-1 | | | |
| G-2 | | | |
| Total amount | 100.55 | 100.48 | 100.55 |
| Compatibility | ○ | ○ | ○ |
| Uniformity | ○ | ○ | ○ |
| Durability | ○ | Δ | Δ |
| Liquid crystal contamination | ○ | Δ | ○ |
| Transparency | >95 | >95 | >95 |
| Phase difference | <5 | <5 | <5 |

**Table 6**

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| PV-1 | | | | | | | |
| PV-2 | | | | | | | 100 |
| PV-3 | | | | | | | |
| PV-4 | | | | | | | |
| PV-5 | | | | | | | |
| PV-6 | | | | | | | |
| PV-7 | | | | | | | |
| PV-8 | | | | | | | |
| PV-9 | | | | | | | |
| PV-10 | | | | | | | |
| PV-11 | | | | | | 100 | |
| B-1 | | | | | | | |
| B-2 | | | | | | | |
| B-3 | | | | | | | |
| B-4 | | | | | | | |
| B-5 | | | | 0.18 | | | |
| B-6 | | | | | | | |
| B-7 | | | | | | | |
| B-8 | | | | | | | |
| B-9 | | | | | | | |
| B-10 | 1 | 1 | 0.1 | | | | |
| C-1 | | | | | | | |
| C-2 | | | | | | | |
| C-3 | | | | | | | |
| C-4 | | | | | | | |
| D-1 | | | | | | | |
| D-2 | | | | | | | |
| D-3 | | | | | | | |
| D-4 | | | | | | | |
| E-1 | | | 80 | 100 | 80 | | |
| E-2 | 100 | | 10 | | | | |
| E-3 | | 100 | | | | | |
| F-1 | | | | | 5 | | |
| F-2 | | | | | 5 | | |
| F-3 | | | | | 10 | | |
| F-4 | | | | | | | |
| F-5 | | 1 | | | | | |
| G-1 | | 0.1 | | | 5 | | |
| G-2 | | | | | | | |
| Total amount | 101 | 102.1 | 90.1 | 100.18 | 105 | 100 | 100 |
| Compatibility | ○ | Δ | ○ | ○ | ○ | ○ | ○ |
| Uniformity | ○ | Δ | Δ | Δ | Δ | ○ | Δ |
| Durability | X | X | XX | XX | XX | X | XX |
| Liquid crystal contamination | X | X | Δ | Δ | Δ | ○ | ○ |
| Transparency | 90 | 88 | 87 | 85 | 85 | 92 | >95 |
| Phase difference | 12 | 10 | 12 | <5 | <5 | <5 | <5 |

### [Evaluation of coating composition]

The coating compositions obtained in Examples 1 to 31 and the comparative coating compositions obtained in Comparative Examples 1 to 7 were subjected to the following evaluations. The evaluation results are shown in Tables 1 to 6.

### (Solution compatibility)

States of the coating compositions obtained in Examples 1 to 31 and the comparative coating compositions obtained in Comparative Examples 1 to 7 were visually checked. Determination criteria are as follows.
○: Transparent and uniform
Δ: White turbidity
X: Not compatible (phase separation)

### (Uniformity of coating film)

### <Examples 1 to 26, and 29 to 31 and Comparative Examples 1, 3, 4, 6, and 7>

### a1) Production of coating film

The coating compositions were applied to a glass substrate using a spin coater, prebaked on a hot plate at 90°C for 5 minutes, and then heated at 140°C for 15 minutes, to thereby produce evaluation substrates. In spin coating conditions, the film thickness was adjusted to 5.0 to 5.5 µm by a stylus type shape measuring device (Dektak150 commercially available from ULVAC, Inc.).

### b1) State of coating film

Regarding the produced coating film on the substrate, evaluation was performed by haze measurement simultaneously with visual checking of the state of the surface. A haze meter NDH5000 (commercially available from Nippon Denshoku Industries Co., Ltd.) was used for measurement, and determination criteria were as follows.
○: Uniform coating film, a haze of less than 1
Δ: Uniform coating film, a haze of 1 or more and less than 3
X: Whitening or irregularity of coating film was observed and a haze of 3 or more
XX: Part of coating film was peeled off or dissolved

### <Examples 27 and 28 and Comparative Examples 2 and 5>

### a2) Production of coating film

The coating compositions were applied to a glass substrate using a spin coater, prebaked on a hot plate at 90°C for 5 minutes, and light having a wavelength of 365 nm was then emitted at 500 mJ/cm² using a high pressure mercury lamp, and additionally, heating was performed at 140°C for 15 minutes, to thereby produce evaluation substrates. In spin coating conditions, the film thickness was adjusted to 5.0 to 5.5 µm by a stylus type shape measuring device (Dektak150 commercially available from ULVAC, Inc.).

### b2) State of coating film

Regarding the produced coating film on the substrate, evaluation was performed by haze measurement simultaneously with visual checking of the state of the surface. A haze meter NDH5000 (commercially available from Nippon Denshoku Industries Co., Ltd.) was used for measurement, and determination criteria were as follows.
○: Uniform coating film, a haze of less than 1
Δ: Uniform coating film, a haze of 1 or more and less than 3
X: Whitening or irregularity of coating film was observed and a haze of 3 or more

### (Durability)

Evaluation was performed by haze measurement simultaneously with visual checking of the state of the surface of the coating film after the substrates produced in the above a1) and a2) were left under conditions of 85°C and 85% RH for 24 hours. A haze meter NDH5000 (commercially available from Nippon Denshoku Industries Co., Ltd.) was used for measurement, and determination criteria were as follows.
○: Uniform coating film, a haze of less than 1
Δ: Uniform coating film, a haze of 1 or more and less than 3
X: Whitening or irregularity of coating film was observed and a haze of 3 or more
XX: Part of coating film was peeled off or dissolved

### (Liquid crystal contamination)

Liquid crystal compositions including the following liquid crystal compounds No. 1 to No. 11 were brought into contact with the coating film of the substrates produced in the above a1) and a2) at 60°C for 24 hours, and the liquid crystal compositions were then extracted. A voltage holding ratio (VHR) of the liquid crystal composition before and after contact was measured, a reduction rate of VHR ((VHR before contact - VHR after contact) /VHR before contact × 100%) was obtained, and evaluated according to the following criteria. For evaluation, the liquid crystal composition was injected into a liquid crystal evaluation TN cell (with a cell thickness of 5 µm, an electrode area of 8 mm × 8 mm, alignment film JALS2096), and VHR was measured using VHR-1A (commercially available from Toyo Corporation). Regarding measurement conditions, a pulse voltage width was 60 µs, a frame period was 16. 7 ms, a wave height was ±5 V, and a measurement temperature was 25°C.
○: A reduction rate of VHR was less than 1%
Δ: A reduction rate of VHR was 1% to 3%
X: A reduction rate of VHR was larger than 3%

The coating composition of the present invention was beneficial for a coating material and resist material for a liquid crystal display because the reduction rate of VHR was low and the liquid crystal contamination was reduced.

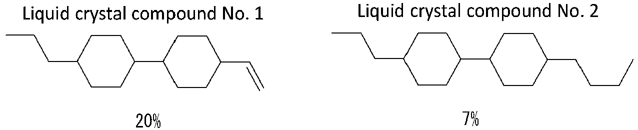

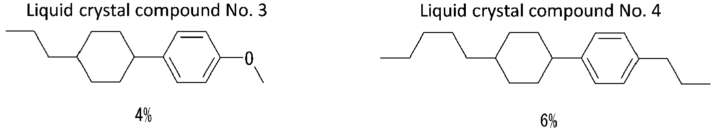

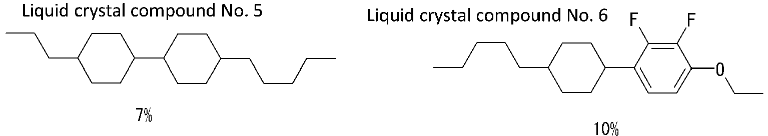

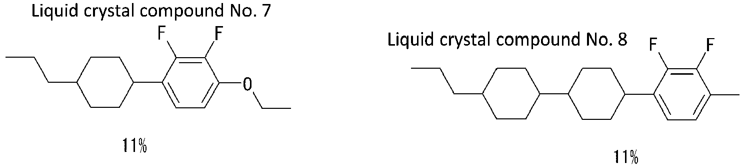

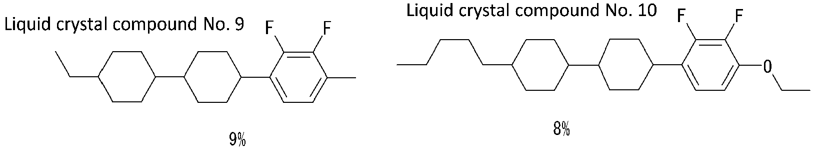

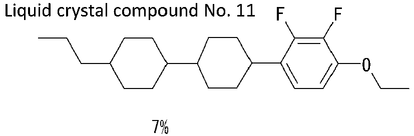

### (Transparency)

The coating compositions were applied to a glass substrate using a spin coater, prebaked on a hot plate at 90°C for 5 minutes, and light having a wavelength of 365 nm was then emitted at 500 mJ/cm² using a high pressure mercury lamp, and additionally, heating was performed at 140°C for 15 minutes, to thereby produce evaluation substrates. In spin coating conditions, the film thickness was adjusted to 5.0 to 5.5 µm by a stylus type shape measuring device (Dektak150 commercially available from ULVAC, Inc.) . A UV-visible absorption (UV-Vis) spectrum for the evaluation substrate was measured using a UV-visible absorbance meter V-670 (commercially available from JASCO Corporation). The transmittance of the coating film at 400 nm was calculated using the glass substrate as a reference.

### (Phase difference)

The coating compositions were applied to a glass substrate using a spin coater, prebaked on a hot plate at 90°C for 5 minutes, and light having a wavelength of 365 nm was then emitted at 500 mJ/cm² using a high pressure mercury lamp, and additionally, heating was performed at 140°C for 15 minutes, to thereby produce evaluation substrates. In spin coating conditions, the film thickness was adjusted to 5.0 to 5.5 µm by a stylus type shape measuring device (Dektak150 commercially available from ULVAC, Inc.). The value of the in-plane phase difference R0 at 500 nm of the evaluation substrate was measured using RETS-100 (commercially available from Otsuka Electronics Co., Ltd.).

### (Photolithography)

The coating compositions obtained in Examples 27 and 28 were applied to a glass substrate using a spin coater of which the condition was adjusted so that the film thickness was 5.0 to 5.5 µm using a stylus type shape measuring device (Dektak150 commercially available from ULVAC, Inc.), and then prebaked on a hot plate at 90°C for 10 minutes. Then, the temperature was cooled to room temperature, light having a wavelength of 365 nm was emitted at 500 mJ/cm² using a high pressure mercury lamp through a photo mask (Line/Space = 50 µm/50 µm), immersion was performed in deionized water at 23°C for 1 minute, and remaining water was then removed using an air gun, and the substrate was dried in an oven at 140°C for 30 minutes.

When the pattern after drying was observed under a laser microscope, the pattern width of the patterned cured product was within 50±3 µm in all the substrates made of the coating compositions, and favorable patterns were obtained.

Based on the evaluation results in Tables 1 to 6, it can be clearly understood that the coating composition of the present invention can form a cured product having excellent uniformity, durability, and transparency, reduced liquid crystal contamination, and a small phase difference.

### [Examples 32 and 33 and Comparative Example 8]

### (Production of optical waveguide)

Coating compositions shown in the following Table 7 as clad materials were laminated on a firing silicon substrate at a thickness of 30 µm by a spin coating method, UV light with a light intensity of 10 mW/cm² was emitted for 200 seconds, and heating was then performed at 120°C for 15 minutes, to thereby form cured products. Next, coating compositions shown in the following Table 7 as core materials were laminated on the formed cured products at a thickness of 20 µm by a spin coating method, and UV light with a light intensity of 10 mW/cm² was emitted for 40 seconds using a negative type photo mask. Developing in water was performed, heating and curing were performed at 140°C for 30 minutes, to thereby form patterned cured products with a line width of 20 µm. In addition, coating compositions shown in the following Table 7 as clad materials were laminated by a spin coating method so that a thickness from the upper surface of the patterned cured product was 30 µm, UV light with a light intensity of 10 mW/cm² was emitted for 200 seconds and heating was then performed at 140°C for 30 minutes, to thereby produce an optical waveguide on the silicon substrate.

### (Method of measuring optical transmission loss of optical waveguide)

Using an amplified spontaneous emission (ASE) light source having an isolator with a wavelength of 850 nm, an optical transmission loss was calculated by subtracting a connection loss from a transmission loss measured by a cut back method. The measurement results are shown in Table 7. The smaller an optical transmission loss, the more suitable long distance transmission.

**Table 7**

| | Example 32 | Example 33 | Comparative Example 8 |
|---|---|---|---|
| Core material | Example 27 | Example 28 | Comparative Example 6 |
| Clad material | Example 31 | Example 31 | Example 31 |
| Optical transmission loss (dB/cm) | 0.1 | 0.1 | 1.5 |

Based on the results in Table 7, the coating composition of the present invention was beneficial for producing an optical waveguide because it could be developed in water and thus it had a low environmental load and could form a cured product having a small optical transmission loss.

### [Examples 34 to 36 and Comparative Examples 9 and 10] (Production of coated paper)

Coating compositions shown in the following Table 8 were impregnated into toilet paper (commercially available from Kasuga Paper Industry Co., Ltd. Core Use), and two sheets were laminated and dried at 90°C for 1 hour. After drying, UV light with a light intensity of 10 mW/cm² was emitted for 200 seconds, and heating was then performed at 120°C for 15 minutes, to thereby obtain coated paper. The coated paper cut to a size of 5 cm × 5 cm was dropped into 200 mL of deionized water and stirred using a mechanical stirrer for 5 minutes, and the water resistance of the coated paper was evaluated. Determination criteria were as follows. The evaluation results are shown in Table 8. Here, the expression "without UV irradiation" in the table means that, in production of the coated paper, there was no irradiation with UV light with a light intensity of 10 mW/cm². In addition, the symbol - in the table means that no evaluation was performed.
○: Two sheets of toilet paper remained in an adhered state
Δ: Two sheets of toilet paper were peeled off but maintained their shape
X: Two sheets of toilet paper were peeled off and did not maintain their shape

**Table 8**

| | Example 34 | Example 35 | Example 36 | Comparative Example 9 | Comparative Example 10 |
|---|---|---|---|---|---|
| Coating composition used | Example 17 | Example 28 | Example 29 | Comparative Example 7 | None |
| Without UV irradiation | ○ | X | Δ | X | X |
| With UV irradiation | - | ○ | ○ | - | - |

Based on the results in Table 8, the coating composition of the present invention was beneficial as a coating agent for paper because it could improve the water resistance of paper.

## Claims

1. A coating composition comprising a water-soluble polymer selected from the group consisting of the following (1) and (2):
(1) a polyvinyl alcohol, a modified product thereof or a derivative thereof; and
(2) a polyvinylpyrrolidone, a modified product thereof or a derivative thereof.

2. The coating composition according to claim 1, further comprising at least one crosslinking agent selected from the group consisting of a zirconium compound, a titanium compound, a bisazide compound, a blocked isocyanate, and an epoxy compound.

3. The coating composition according to claim 1 or 2, further comprising at least one selected from the group consisting of a water-soluble polyfunctional (meth)acrylate and a water-soluble polyfunctional (meth)acrylamide.

4. The coating composition according to claim 1, further comprising a water-soluble polyester having a carboxyl group and/or a salt of a carboxyl group as a substituent.

5. The coating composition according to claim 3, wherein the water-soluble polyfunctional (meth)acrylate has a structure represented by the following General Formula (I): 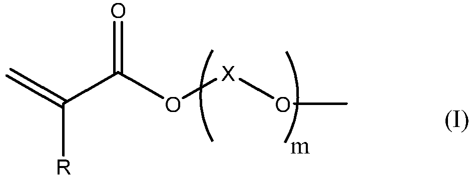 wherein, R represents a hydrogen atom, a methyl group or a halogen atom, X represents an alkylene group having 1 to 6 carbon atoms, and m is a number of 1 to 30.

6. The coating composition according to claim 3, wherein the water-soluble polyfunctional (meth)acrylamide has a structure represented by the following General Formula (II): 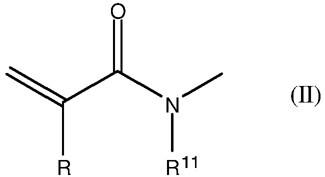 wherein, R represents a hydrogen atom, a methyl group or a halogen atom, and R¹¹ represents a hydrogen atom or an alkyl group having 1 to 4 carbon atoms.

7. The coating composition according to any one of claims 1 to 6, wherein the water-soluble polymer is a polyvinyl alcohol having an acetoacetic ester group or a photosensitive group on the side chain.

8. The coating composition according to claim 7, wherein the polyvinyl alcohol having a photosensitive group has one or more constituting units selected from the group consisting of constituting units represented by the following General Formulae (IIIα), (IIIβ), (IIIγ), (IIIδ) and (IIIε) : 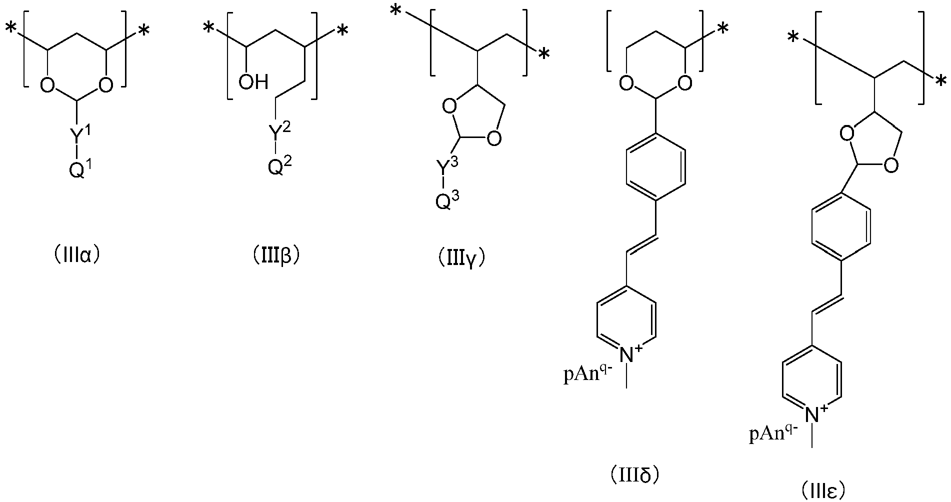
wherein, Y¹, Y² and Y³ each independently represent a direct bond or a divalent linking group,
Q¹, Q² and Q³ each independently represent a photosensitive group,
An^{q-} represents a q-valent anion, q represents 1 or 2, and p represents a coefficient for keeping a charge neutral, and
* indicates a bond.

9. The coating composition according to claim 7 or 8, wherein the polyvinyl alcohol having a photosensitive group is a water-soluble polymer represented by the following General Formula (IV) : 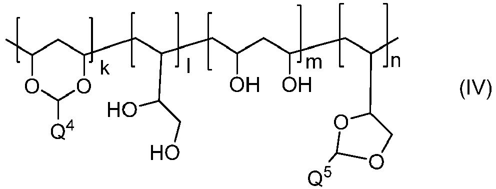 wherein, Q⁴ and Q⁵ each independently represent a photosensitive group, and 100 < k + 1 + m + n < 3,000 is satisfied.

10. The coating composition according to claim 8 or 9, wherein Q¹, Q² and Q³ in General Formulae (IIIα), (IIIβ) and (IIIγ), and Q⁴ and Q⁵ in General Formula (IV) are selected from among a stilbazolium group, a cinnamoyl group, a vinyl group, an acrylic group, a methacryl group, an acrylic amide group or a methacrylic amide group, a cinnamyl group, a cinnamylidene group, a cinnamylidene acetyl group, a chalcone group, a coumarin group, an isocoumarin group, a 2,5-dimethoxystilbene group, a maleimide group, an α-phenylmaleimide group, a 2-pyrone group, an azide group, a thymine group, a quinone group, a maleimide group, a uracil group, a pyrimidine group, a styryl pyridinium group, or a styryl quinolium group.

11. The coating composition according to any one of claims 1 to 10, wherein the coating composition is impregnated into cloth or paper.

12. The coating composition according to any one of claims 1 to 10, wherein the coating composition is used for an optical element.

13. A cured product of the coating composition according to any one of claims 1 to 12.

14. A method of producing a cured product comprising a step of curing the coating composition according to any one of claims 1 to 12.

15. A patterned cured product of the coating composition according to any one of claims 1 to 12.

16. A method of producing a patterned cured product comprising a step of curing the coating composition according to any one of claims 1 to 12 into a patterned form.
